# EUROPÄISCHE PATENTSCHRIFT

(11) **EP 1 307 678 B1**
(45) Veröffentlichungstag und Bekanntmachung des Hinweises auf die Patenterteilung: **09.02.2005**
(21) Anmeldenummer: 01956250.3
(22) Anmeldetag: 31.07.2001
(51) Int. Cl.: F16L 25/06, F16B 33/02

(54) **VERBINDUNGSVORRICHTUNG FÜR GEHÄUSETEILE VON TURBOLADERN**
CONNECTING DEVICE FOR HOUSING-PARTS OF TURBOCHARGERS
DISPOSITIF DE CONNEXION POUR PARTIES DE BOITIER DE TURBOCOMPRESSEURS

(30) Priorität: 07.08.2000 EP 00810704
(43) Veröffentlichungstag der Anmeldung: 07.05.2003
(73) Patentinhaber: ABB Turbo Systems AG, 5400 Baden (CH)
(72) Erfinder: BÄTTIG, Josef, CH-5704 Egliswil (CH)
(74) Vertreter: Ingold, Mathias
(86) Internationale Anmeldenummer: PCT/CH2001/000464
(87) Internationale Veröffentlichungsnummer: WO 2002/012770

(56) Entgegenhaltungen:
- DE-A- 19 755 531
- US-A- 3 345 087
- US-A- 3 828 561
- US-A- 4 094 539
- US-A- 4 610 465
- US-A- 4 927 336

## Beschreibung

### Technisches Gebiet

Die Erfindung bezieht sich auf ein Turboladergehäuse gemäss dem Oberbegriff des Patentanspruches 1 sowie auf einen Turbolader mit einem solchen Turboladergehäuse, wie es aus EP-A-0 248 624 bekannt ist.

### Stand der Technik

Turbolader und insbesondere auch das Gehäuse eines Turboladers sind in der Regel aus vielen einzelnen Bauteilen zusammengesetzt. Die drei Hauptbestandteile des Gehäuses sind beispielsweise Verdichtergehäuse, Turbinengehäuse und Lagergehäuse. Turbinengehäuse und Verdichtergehäuse umfassen ihrerseits meist noch mehrere Bauteile wie Gasaustrittsgehäuse und Gaseintrittsgehäuse, Einsatzwand, Rückwand hinter dem Turbinenrad bzw. Rückwand hinter dem Verdichterrad. Die Verbindungen der einzelnen Bauteile müssen hohen Anforderungen gerecht werden, da zum einen grosse Kräfte an diesen Verbindungen wirken und zum andern viele dieser Verbindungen auch unter Belastung gasdicht sein müssen.

Da sich viele Turboladerbauteile und vor allem auch die Gehäuseteile konzentrisch um die Turboladerachse erstrecken hat es sich als vorteilhaft erwiesen, miteinander zu verbindende Bauteile mit sich radial nach aussen erstreckenden Ringflanschen zu versehen, deren axiale Stirnseiten dann ringförmig aneinander anliegen. Diese Flansche sind jeweils mit gleichmässig über dem Umfang verteilten Aufnahmeöffnungen versehen, die miteinander in Deckung gebracht werden können. Auf diese Weise können die beiden Bauteile schliesslich mit Hilfe von Befestigungsmitteln wie Bolzen oder Schrauben fest miteinander verbunden werden. DE-C-36 42 121 zeigt derart miteinander verbundene Turboladerbauteile, nämlich zwei Gehäuseteile des Lagergehäuses sowie Lagergehäuse und Turbinengehäuse einerseits und Lagergehäuse und Verdichtergehäuse andererseits. Diese Ausgestaltung der Verbindungsbereiche der Turboladerbauteile erlaubt eine sehr einfache Fertigung der Bauteile, birgt aber die Gefahr, dass bei zu grossen radialen Kräften die Bolzen abscheren.

Um dieser Gefahr entgegenzuwirken, hat man, wie dies in EP-A-0 248 624 gezeigt ist, die Bauteile in ihren Verbindungsbereichen derart mit radialen Schultern und gegengleichen Aussparungen versehen, dass die Schulter im ersten Bauteil und die Aussparung im zweiten Bauteil einander axial überlappen und radial formschlüssig ineinandergreifen. Schulter und Aussparung bilden so eine formschlüssige, radial gesicherte Verbindung zwischen den Bauteilen, welche die radialen Kräfte aufnehmen kann. Das Einbringen von Aufnahmeöffnungen in den Bereich von Schulter und Aussparung würde grosse Dichtigkeitsprobleme mit sich bringen. Daher weist das erste Bauteil mit der Aussparung eine radial aussen an die Aussparung angrenzende Materialverdickung in der Art einer Ringwulst auf, welche mit den gleichmässig über den Umfang verteilten Aufnahmeöffnungen für die Befestigungsmittel versehen ist. Um die formschlüssige, radiale Verbindung axial zu sichern wird eine ringförmige Sicherungsvorrichtung axial an die Ringwulst angelegt, welche radial nach innen über die Ringwulst hinausragt und an der Rückseite der in der Aussparung befindlichen Schulter des ersten Bauteils anliegt. Auch die Sicherungsvorrichtung weist Aufnahmeöffnungen auf, so dass sie mittels Bolzen bzw. Schrauben derart an der Ringwulst befestigt werden kann, dass die Sicherungsvorrichtung die Schulter des ersten Bauteils in der Aussparung des zweiten Bauteils axial festklemmt. Zwar sind die Befestigungsmittel bei dieser Ausgestaltung der Turboladerbauteile vor dem Abscheren geschützt aber neben den Bolzen bzw. Schrauben ist eine zusätzliche Sicherungsvorrichtung für die axiale Fixierung nötig. Zudem ist die Herstellung von Schulter und Aussparung aufwendig, da sie sehr genau gearbeitet sein müssen, um die geforderte Dichtigkeit zu erreichen.

Bei beiden Ausführungsformen müssen für die Montage und Demontage eine Vielzahl von Bolzen oder Schrauben fixiert bzw. gelöst werden. Bei Wartungsarbeiten ist ein Öffnen des Gehäuses daher zeitaufwendig, zumal die Bolzen bzw. Schrauben aufgrund der Belastungen oft verklemmen und/oder aufgrund von Korrosion nur schwer lösbar sind.

### Darstellung der Erfindung

Aufgabe der Erfindung ist es daher, ein Turboladergehäuse mit einfach miteinander verbindbaren Gehäuseteilen zu schaffen, welches kostengünstig in der Herstellung ist, und welches eine einfache Montage und Demontage erlaubt.

Diese Aufgabe wird gelöst durch ein Turboladergehäuse mit den Merkmalen des Patentanspruches 1.

Das erfindungsgemässe Turboladergehäuse weist Gehäuseteile mit einander in axialer Richtung koaxial überlappenden Verbindungsbereichen auf, die radial formschlüssig ineinander greifen und mittels einer etwa ringförmigen Sicherungsvorrichtung axial gesichert sind. Die Sicherungsvorrichtung umfasst mindestens zwei ringsegmentförmige Sicherungselemente. Die Verbindungsbereiche der Bauteile weisen einander gegenüberliegende Umfangsnuten auf, in welche die mindestens zwei ringsegmentförmigen Sicherungselemente einsetzbar sind. Zur axialen Fixierung greifen die Sicherungselemente gleichzeitig in die beiden Umfangsnuten ein, wobei den Sicherungselementen Verschiebemittel zum Verschieben in radialer Richtung zugeordnet sind und die radiale Höhe der ersten Umfangsnut im ersten Turboladerbauteil mindestens so gross ist wie die radiale Höhe der Sicherungselemente. Für jedes Sicherungselement ist wenigstens in einem der beiden Turboladerbauteile der jeweiligen Umfangsnut zugeordnet eine radiale Öffnung für die Hindurchführung des Verschiebemittels vorgesehen.

Die Turboladerbauteile mit den einander gegenüberliegenden Umfangsnuten sind einfach in der Herstellung und sind durch die ringsegmentförmigen Sicherungselemente einfach miteinander zu verbinden und axial gegeneinander zu fixieren. Durch die Verschiebungsmittel können die Sicherungselemente sehr leicht aus ihrer nicht fixierenden Stellung in der ersten Umfangsnut in die fixierende Stellung zwischen der ersten und der zweiten Umfangsnut gebracht werden bzw. umgekehrt. Auf diese Weise ist es möglich eine axiale Fixierung herzustellen, die jederzeit lösbar und wieder herstellbar ist. Durch die Aufteilung der Sicherungsvorrichtung in mehrere Sicherungselemente, die über den Umfang der Turboladerbauteile verteilt angeordnet sind, ist es möglich dieses Sicherungssystem für Turboladerbauteile von beliebig grossem Durchmesser einzusetzen. Die Form der Turboladerbauteile muss nicht zwingend zylindrisch sein. Die Bauteile können beispielsweise auch einen ovalen oder sonst achssymmetrischen Querschnitt haben. Bei Turboladerbauteilen mit unterschiedlichem Durchmesser können durch geeignete Anpassung der Wandstärken der Bauteile im Verbindungsbereich die Durchmesser im einander überlappenden Bereich so ausgebildet werden, dass sie formschlüssig ineinander greifen. Die Sicherungselemente sind in den Nuten weitgehend vor Korrosion geschützt und verklemmen auch bei grossen mechanischen Belastungen aufgrund ihrer Segmentierung nicht. Dank den radial geführten Öffnungen sind die Verschiebemittel leicht von aussen zugänglich und bedienbar. Ist die Öffnung abgedichtet, so wird die Korrosionsgefahr weiter verringert und die Dichtigkeit der Verbindung ist auf einfache Weise gewährleistet.

Vorteilhafterweise weist die zweite Umfangsnut des zweiten Turboladerbauteils eine geringere radiale Höhe auf als das Sicherungselement. Auf diese Weise kann das Sicherungselement von der nicht fixierenden Stellung in der ersten Umfangsnut sehr einfach radial in die fixierende Stellung verschoben werden, indem das Verschiebemittel solange betätigt wird, bis das Sicherungselement mit dem Nutboden der zweiten Umfangsnut in Anschlag gebracht ist.

Auch durch Ausstattung der gesamten Umfangsnuten mit Dichtmitteln kann die nötige Dichtigkeit der Verbindung und ein guter Korrosionsschutz erreicht werden.

Sehr vorteilhaft ist es, als Verschiebemittel eine Schraube oder einen Verschiebestift vorzusehen. Schrauben sind einfach erhältlich, kostengünstig und einfach in der Handhabung.

Verschiebestifte sind dann vorteilhaft, wenn beispielsweise ein Überstehen einer Schraubenmutter oder eines Schraubenkopfes über das Turboladerbauteil unerwünscht ist.

Bei in Umfangsrichtung gesehen längeren Sicherungselementen ist es günstig zusätzliche Verschiebemittel vorzusehen, um über die gesamte Länge des Sicherungselementes eine stabile Positionierung in der fixierenden Stellung zwischen den Umfangsnuten zu gewährleisten. Als zusätzliche Verschiebemittel können beispielsweise Anpressschrauben vorgesehen sein, die durch zusätzliche radiale Löcher mit dem jeweiligen Sicherungselement in Verbindung gebracht werden können.

Als sehr vorteilhaft hat es sich erwiesen, als zusätzliche Verschiebemittel die in Umfangsrichtung liegenden Endbereiche der Sicherungselemente in Form von Federenden auszubilden. Auf diese Weise wirken die Sicherungselemente wie eine Art Schnappverschluss, wobei die Verbindung z.B. mittels eines Verschiebestiftes lösbar ist.

Werden die beiden Umfangsnuten in Umfangsrichtung auf die Länge der Sicherungselemente begrenzt, so bewirkt das Sicherungssystem nicht nur eine Fixierung in axialer Richtung sonder auch in Umfangsrichtung.

Bei Turboladerbauteilen, die bereits auf irgendeine Weise zumindest teilweise in ihren Positionen zueinander festgelegt sind, indem sie beispielsweise an weiteren Turboladerbauteilen befestigt oder bereits miteinander verbunden sind, können die Flanken der Umfangsnuten leicht versetzt zueinander angeordnet sein, so dass beim Einschieben der Sicherungselemente in ihre fixierende Stellung die Bauteile in axialer Richtung gegeneinander verspannt werden. Ein besonderer Vorteil ist es in einem solchen Fall, zumindest die mit der Spannkraft beaufschlagte Flanke der zweiten Umfangsnut in stumpfen Winkel zum Nutboden anzuordnen, da die Sicherungselemente so leichter in die zweite Umfangsnut einschiebbar sind. Die Sicherungselemente weisen dann vorteilhafter Weise entsprechend abgeschrägte Flanken auf.

Ein Turbolader, dessen Bauteile, insbesondere dessen Gehäuseteile, erfindungsgemäss ausgestaltet sind, lässt sich einfach montieren und z.B. für Wartungszwecke auch einfach demontieren, wodurch die Stillstandzeiten reduziert wird. Die Turboladerbauteile mit ihren Verbindungsbereichen aber auch die Sicherungselemente und Verschiebemittel sind einfach und kostengünstig herstellbar, wodurch der Turbolader insgesamt günstiger ist.

Weitere bevorzugte Ausführungsformen sind Gegenstand weiterer abhängigen Patentansprüche.

### Kurze Beschreibung der Zeichnungen

Im Folgenden wird der Erfindungsgegenstand anhand bevorzugter Ausführungsbeispiele, welche in den beiliegenden Zeichnungen dargestellt sind, näher erläutert. Es zeigen rein schematisch:
- Figur 1: Ein Teil eines erfindungsgemässen Turboladers im Schnitt entlang seiner Längsachse mit zwei erfindungsgemässen Turboladerbauteilen;
- Figur 2a: im Schnitt entlang der Linie II-II der Fig.1 die Verbindungsbereiche der beiden erfindungsgemässen Turboladerbauteile;
- Figur 2b: in Vergrösserung einen Ausschnitt aus Fig. 2a mit einem Verschiebemittel;
- Figur 3a: eine zweite Ausführungsform der erfindungsgemässen Turboladerbauteile und der zugehörigen Sicherungsvorrichtung im Schnitt durch ihre Umfangsnuten;
- Figur 3b: die Ausführungsform aus Fig. 3a im Schnitt entlang der Längsachse des Turboladers;
- Figuren 4 und 5: weitere Ausführungsformen der Turboladerbauteile und der zugehörigen Sicherungsvorrichtung in analoger Darstellung zur Darstellung in Fig. 3a; und
- Figur 6: im Schnitt durch die Umfangsnuten und entlang der Längsachse des Turboladers zwei einander formschlüssig überlappende Turboladerbauteile, die erfindungsgemäss miteinander verbunden und mittels spezieller Ausgestaltung der erfindungsgemässen Turboladerbauteile in axialer Richtung gegeneinander verspannt sind.

Die in den Zeichnungen verwendeten Bezugszeichen und deren Bedeutung sind in der Bezugszeichenliste zusammengefasst aufgelistet. Grundsätzlich sind in den Figuren gleiche Elemente mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

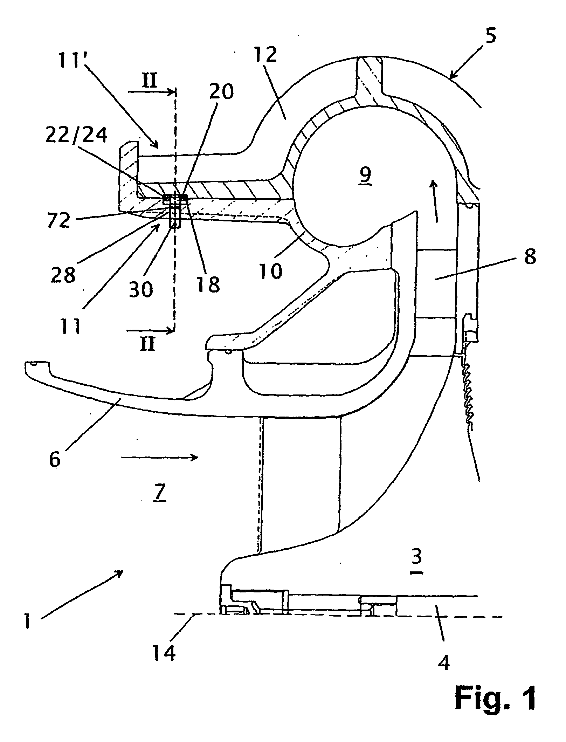

Figur 1 zeigt einen Teil einer Verdichterseite eines Turboladers 1 im Schnitt zur Längsachse 14 des Turboladers 1 mit einem Verdichterrad 3, das auf einer Welle 4 im Verdichtergehäuse 5 fixiert ist. Mittels der Welle 4 ist das Verdichterrad 3 von einem Turbinenrad (nicht dargestellt) des Turboladers 1 antreibbar. Eine Einsatzwand 6 begrenzt radial aussen einen Ansaugkanal 7, der über das Verdichterrad 3 und einen Diffusor 8 in einen Gasaustrittskanal 9 mündet. Der Gasaustrittskanal 9 wird von zwei erfindungsgemässen Bauteilen 10, 12 begrenzt, nämlich radial nach innen von einem Innenwandbauteil 10 und radial nach aussen von einem Gasaustrittsgehäuse 12. Beide Bauteile 10, 12 sind Bestandteil des Verdichtergehäuses 5. In Ihren Verbindungsbereichen 11, 11' überlappen die beiden Bauteile 10, 12 einander in Achsrichtung 14 und greifen radial formschlüssig ineinander. Die Verbindungsbereiche 11, 11' sind mit einander gegenüberliegenden Umfangsnuten 18, 20 gleicher Breite versehen, deren offene Seiten einander zugekehrt sind. Zur axialen Sicherung sind in den Umfangsnuten 18, 20 als Sicherungsvorrichtung 22, mehrere über den Umfang regelmässig verteilte ringsegmentförmige Sicherungselemente 24 vorgesehen.

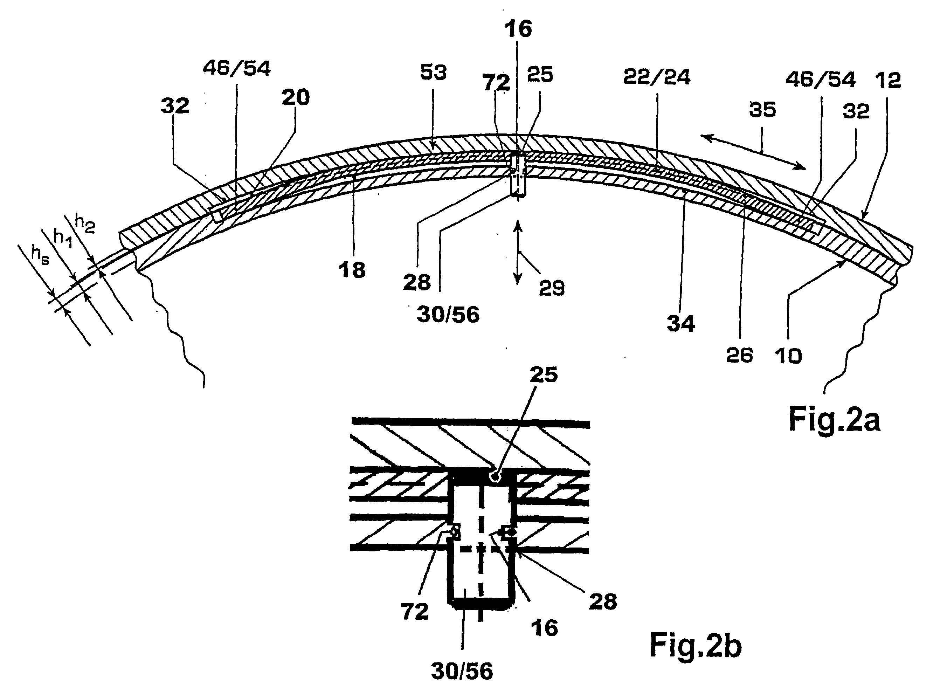

In Fig. 2a ist ein Abschnitt des Umfangs der beiden erfindungsgemässen Turboladerbauteile 10, 12 im Schnitt entlang der in Fig. 1 mit II-II gekennzeichneten Linie mit nur einem der über den Umfang verteilten Sicherungselemente 24 gezeigt. Das Sicherungselement 24 ist in seiner fixierenden Stellung dargestellt, d.h. es übergreift den Randbereich 26, der ersten Umfangsnut 18, des ersten Bauteils 10 und greift in die zweite Umfangsnut 20 des zweiten Bauteils 12 ein. Im ersten Bauteil 10 ist eine radiale Öffnung 28 angeordnet, durch die als Verschiebemittel 30 zur radialen Verschiebung des Sicherungselementes 24 ein Verschiebestift 56 hindurchgeführt ist. Der Verschiebestift 56 ist mittels einer Schweissnaht 25 fest mit dem Sicherungselement 24 verbunden, wie dies besser in der vergrösserten Darstellung der Fig. 2b zu erkennen ist. Um die Dichtigkeit der Verbindung zu gewährleisten, weist der Verschiebestift 56 eine als Umfangsnut ausgebildete Stiftnut 16 auf, die der Aufnahme eines als O-Ringdichtung ausgebildeten Dichtelementes 72 dient. Die radiale Höhe h₁ der ersten Umfangsnut 18, im ersten Bauteil 10 ist etwas höher oder gleich hoch wie die radiale Höhe hₛ des Sicherungselementes 24, so dass das Sicherungselement 24 mit Hilfe des Verschiebemittels 30 in eine nicht fixierende Stellung bewegbar ist, in welcher das Sicherungselement 24 als Ganzes in der ersten Umfangsnut 18 positioniert ist (nicht dargestellt). Die radiale Höhe h₂ der zweiten Umfangsnut 20 im zweiten Bauteil 12 ist dagegen geringer als diejenige des Sicherungselementes 24. Beim Verschieben des Sicherungselementes 24 in radialer Richtung 29 aus der nicht fixierenden in die fixierende Stellung, muss das Sicherungselement 24 dann einfach nur bis zum Anschlag an den Nutboden 32 der zweiten Umfangsnut 20, verschoben werden. Beim Verschieben des Sicherungselementes 24 aus der fixierenden in die nicht fixierende Stellung, muss das Sicherungselement 24 dann umgekehrt einfach nur bis zum Anschlag an den Nutboden 34 der ersten Umfangsnut 18, im ersten Bauteil 10 verschoben werden. In der hier gezeigten speziellen Ausführungsform sind die in Umfangsrichtung 35 liegenden Endbereiche des Sicherungselementes 24 als Federenden 54 ausgebildet, welche am Nutboden 34 der ersten Umfangsnut 18 abgestützt sind. Die Federenden 54 dienen als zusätzliche Verschiebemittel 46 und drücken den mittleren Bereich 53 des Sicherungselementes 24 in die fixierende Stellung. Das ganze wirkt dann wie eine Art Schnappverschluss, der durch Verschieben des Verschiebestiftes 56 radial nach innen gelöst werden kann. Um eine Sicherung auch in Umfangsrichtung 35 zu erreichen, sind die Umfangsnuten 18, 20 des ersten und zweiten Bauteils 10, 12 in dem hier gezeigten Beispiel in Umfangsrichtung 35 etwa entsprechend der Länge des Sicherungselementes 24 begrenzt.

Neben dem Innenwandbauteil und dem Gasaustrittsgehäuse des Verdichtergehäuses 5 können auch andere, miteinander zu verbindende Bauteile 10, 12 des Turboladers 1 erfindungsgemäss ausgebildet sein, wie beispielsweise das Verdichtergehäuse auf der Seite zum Lagergehäuse und ein Lagergehäuse, verschiedene Lagergehäuseteile sowie Lagergehäuse und Turbinengehäuse, analog zu den Beispielen in DE-C-36 42 121. Auch die Einsatzwand und ein Teil des Verdichtergehäuses oder eine Rückwand des Turbinenrades oder des Verdichterrades, wie dies analog in EP-A-0 248 624 dargestellt ist können, wenn sie erfindungsgemäss ausgebildet sind, mühelos miteinander verbunden und bei Bedarf auch problemlos wieder demontiert werden.

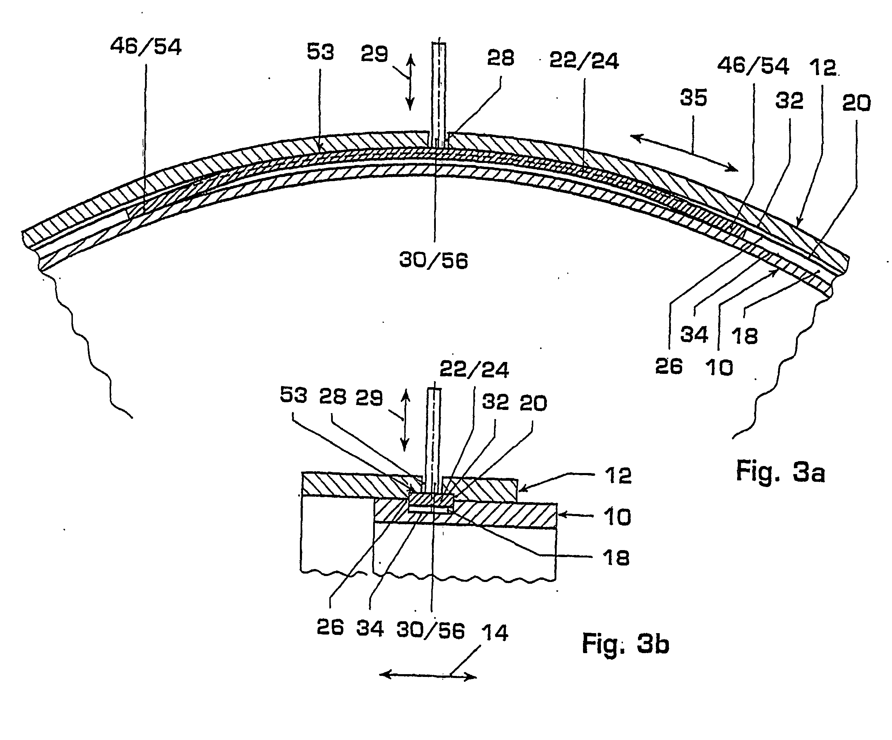

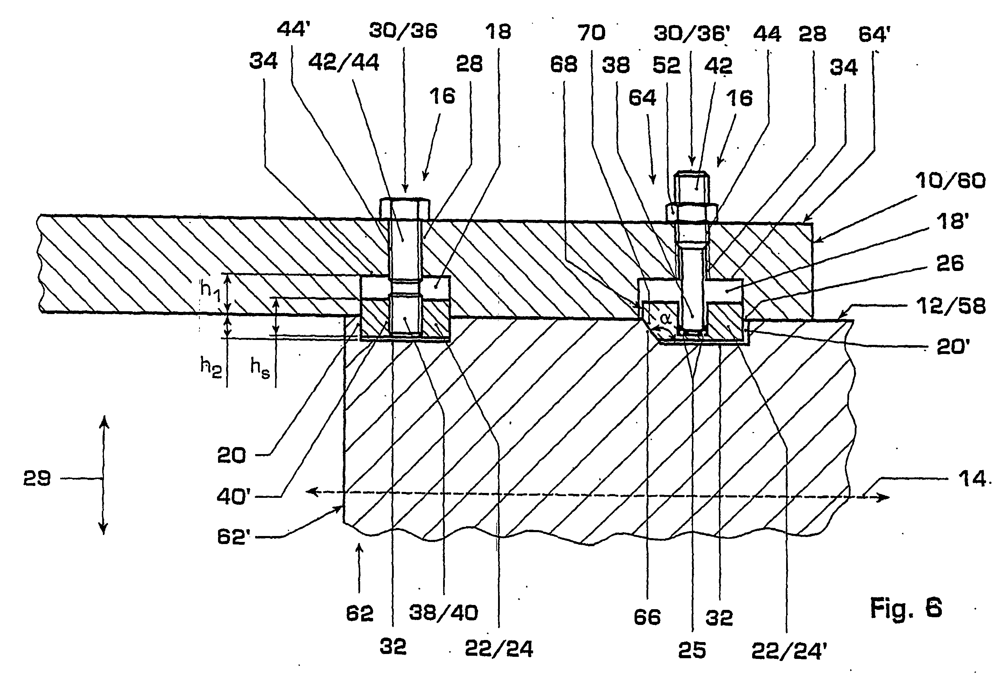

In den weiteren Figuren sind die Verbindungsbereiche von erfindungsgemässen Turboladerbauteilen 10, 12 dargestellt, wobei die dargestellten Turboladerbauteile 10, 12, alle jene Bauteile des Turboladers 1 sein können, die miteinander verbunden werden sollen und sich zumindest in ihren Verbindungsbereichen koaxial zur Turboladerachse 14 erstrecken. Die Verbindungsbereiche dieser Bauteile sind jeweils koaxial zueinander und einander axial überlappend sowie radial formschlüssig ausgebildet. Die Darstellung in den Figuren 3a, 4 und 5 entspricht jeweils der Darstellung in Fig. 2a. Als erstes Bauteil 10 mit der ersten Umfangsnut 18, ist jeweils das Turboladerbauteil definiert, dessen Umfangsnut die radial grössere Höhe aufweist Dies kann das radial innenliegende Bauteil sein, wie in den Figuren 1 bis 5, oder auch das radial aussen liegenden Bauteil, wie in Figur 6. Die radiale Öffnung 28 zur Aufnahme des Verschiebemittels 30 kann im ersten und/oder im zweiten Turboladerbauteil angeordnet sein und befindet sich bezüglich der Länge des Sicherungselementes 24 vorzugsweise etwa in dessen Mitte.

In den Figuren 3a und 3b ist, wie in den Figuren 1 bis 2b ein Sicherungselement 24 mit Federenden 54 dargestellt, welche am Nutboden 34 der ersten Umfangsnut 18 abgestützt sind und den mittleren Bereich 53 des Sicherungselementes 24 in die fixierende Stellung drükken. Die Umfangsnuten 18, 20 sind jeweils, anders als im vorhergehend beschriebenen Beispiel, durchgehend ausgebildet und nicht auf die Länge des Sicherungselementes 24 begrenzt. Eine solche, bezüglich der Herstellung der Umfangsnuten 18, 20 einfachere Lösung, ist immer dann möglich wenn die Bauteile 10, 12 z.B. durch ihre Fixierung an anderen Bauelementen des Turboladers 1 (nicht dargestellt) bereits in Umfangsrichtung 35 fixiert sind. Obwohl also keine Begrenzung der Umfangsnuten vorgesehen ist, sind die Turboladerbauteile 10, 12 dennoch gegen ein gegenseitiges Verdrehen in Umfangsrichtung gesichert.

Als Verschiebemittel 30 ist in dem in den Fig. 3a, 3b gezeigten Beispiel wiederum ein Verschiebestift 56 vorgesehen, der aber in diesem Beispiel radial von aussen durch eine radiale Öffnung 28 im zweiten Bauteil 12 hindurchgeführt ist. Der Verschiebestift 56 wird nur zum Lösen der Verbindung in die Öffnung 28 eingesetzt und ansonsten aus dieser entfernt. Mit dem Verschiebestift 56 kann der mittlere Bereich 53 des Sicherungselementes 24 in die nicht fixierende Stellung, in die erste Umfangsnut 18 gedrückt werden und die beiden Bauteile 10, 12 können voneinander gelöst werden. Vorteil bei dieser Ausführungsform ist, dass in fixierender Stellung der Verschiebestift 56 entfernt wird, und somit keine Elemente über eines der beiden Turboladerbauteile 10, 12 hinausragen. Im Gegensatz zu den Turboladerbauteilen aus den Fig. 1 bis 2b überlappen sich die Bauteile in diesem Beispiel axial aus entgegengesetzter Richtung kommend wie dies in Fig. 3b zu erkennen ist.

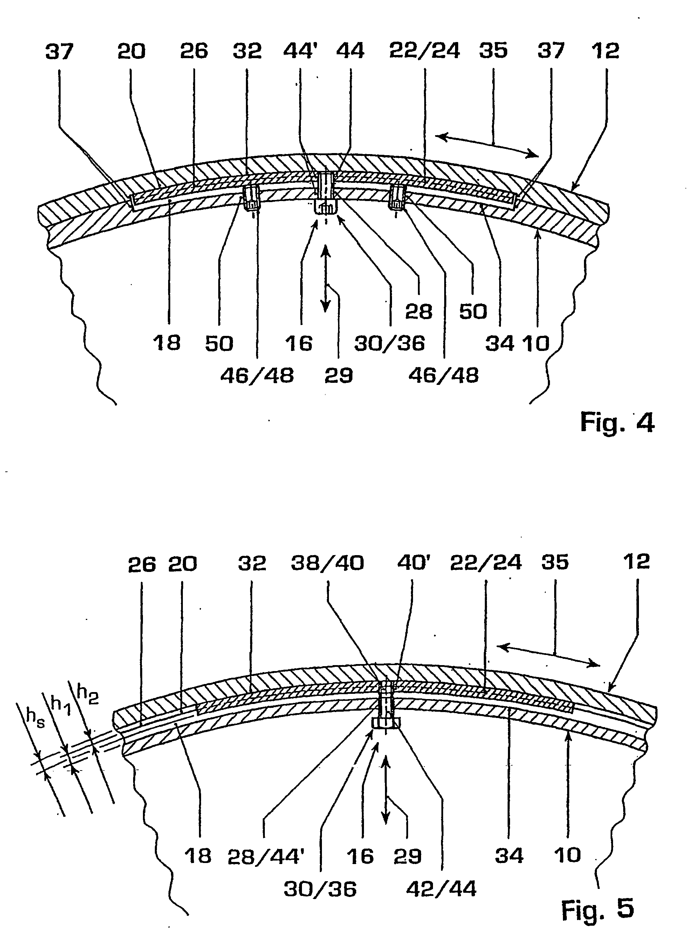

Die in Figur 4 gezeigte Ausführungsform entspricht im wesentlichen derjenigen aus den Figuren 2a, 2b. Die Umfangsnuten 18, 20 der beiden Turboladerbauteile 10, 12 sind in Umfangsrichtung 35 wieder etwa auf die Länge des Sicherungselementes 24 begrenzt und sind im gezeigten Beispiel durch Ausfräsen von entsprechend langen Nutsegementen entlang des Umfanges realisiert. Denkbar ist aber auch eine Begrenzung 37 der Umfangsnuten 18, 20 z.B. durch einfügen von Stoppelementen an entsprechender Stelle in durchgehende Umfangsnuten. Als Stoppelemente können beispielsweise Zapfen, Stoppschrauben o.ä. vorgesehen sein. In der Mitte des Sicherungselementes 24 ist wiederum eine radiale Öffnung 28 im ersten Bauteil 10 vorgesehen, durch die als Verschiebemittel 30 diesmal eine Schraube 36 hindurchgeführt ist. Diese Schraube 36 weist ein einfaches Rechtsgewinde 44 auf, das mit entsprechenden Innengewinden 44' im Sicherungselement 24 und der Öffnung 28 zusammenwirkt. Anstelle der Federenden 54 sind als zusätzliche Verschiebemittel 46 zwei Anpressschrauben 48 vorgesehen, die durch radiale Löcher 50 mit entsprechendem Innengewinde hindurchgeführt sind und auf das Sicherungselement 24 drücken. Die radialen Löcher 50 sind in Umfangsrichtung 35 beabstandet auf beiden Seiten der Öffnung 28 angeordnet. Die Umfangsnuten 18, 20 sind in diesem Beispiel als ganzes mit einem Dichtmittel 72 ausgestattet, das beispielsweise in Form einer Gummibeschichtung der Innenwände der Nuten aufgebracht ist. Die Begrenzung 37 der Nuten 18, 20 in Umfangsrichtung 35 hat ausser der Fixierung der Bauteile 10, 12 in Umfangsrichtung 35, noch einen weiteren Vorteil: Sollte die Schraube 36 aus dem Sicherungselement 24 herausgedreht werden, so kann sich das Sicherungselement 24 nicht innerhalb der Umfangsnuten 18, 20 in Umfangsrichtung 35 verschieben und sozusagen verloren gehen. Ein Wiedereindrehen der Schraube 36 in das Sicherungselement 24 ist jederzeit wieder möglich.

Anstelle der oben beschriebenen Schraube 36 kann natürlich auch eine Schraube 36 als Verschiebemittel 30 verwendet werden, die in ihrem Fussbereich 38 ein Linksgewinde 40 und in ihrem Kopfbereich 42 ein Rechtsgewinde 44 aufweist. Diese Gewinde 40, 44 wirken mit entsprechenden Innengewinden 40', 44' im Sicherungselement 24 und in der Öffnung 28 des ersten Bauteils 10 zusammen, wie dies in Fig. 5 dargestellt ist. Auf diese Weise lässt sich mit wenigen Drehungen der Schraube 36 das Sicherungselement 24 von der fixierenden in die nicht fixierende Stellung und wieder zurück bewegen. Aufgrund der geringen Länge des Sicherungselementes in diesem Beispiel sind keine zusätzlichen Verschiebemittel 46 in Form von Federenden oder Anpressschrauben erforderlich.

In Figur 6 ist eine als Vollzylinder ausgebildete Welle 58 des Turboladers 1 gezeigt, die radial innen liegend das zweite Turboladerbauteil 12 bildet. Ein mit der Welle zu verbindendes erstes Bauteil 10 bildet mit seinem Verbindungsbereich 11 ein Rohr 60, das auf die Welle 58 axial aufgeschoben ist. In diesem Verbindungsbereich weist das erste Bauteil 10 zwei erste Umfangsnuten 18, 18' mit grosser radialer Höhe h₁ und die Welle 58 als zweites Turboladerbauteil 12 zwei den ersten Umfangsnuten 18, 18' gegenüberliegende zweite Umfangsnuten 20, 20' mit geringerer radialer Höhe h₂ und gleicher Breite auf. Die im Endbereich 62 der Welle 58 liegenden Umfangsnuten 18, 20 liegen einander genau gegenüber und nehmen zur axialen Fixierung Sicherungselemente 24 mit Schrauben 36 auf. Die Umfangsnuten 18' 20' im Endbereich 64 des rohrförmigen Verbindungsbereiches 60 dagegen sind leicht versetzt zueinander angeordnet. Die dem Wellenende 62' zugewandte Flanke 66 der Umfangsnut 20' in der Welle 58 ist gegenüber dem Nutboden 32 der zweiten Nut 20' in einem stumpfen Winkel α angeordnet. Die mit dieser Flanke 66 der Umfangsnut 20' zusammenwirkenden Flanken 68 der Sicherungselemente 24' weisen eine entsprechende Abschrägung 70 auf. Zum radialen Verschieben der Sicherungselementen 24' sind Schrauben 36' vorgesehen, deren Kopfbereiche 42 über die radialen Öffnungen 28 des ersten Bauteiles 10 hinausragen und auf welche Muttern 52 aufgeschraubt sind. Im Fussbereich 38 der Schrauben 36' sind diese via Schweissverbindungen 25 fest mit den Sicherungselementen 24' verbunden. Durch Drehen an der Mutter 52 sind die Sicherungselemente 24 in radialer Richtung 29 zwischen der fixierenden und der nicht fixierenden Stellung verschiebbar. Werden die Sicherungselemente 24' aus der ersten Umfangsnut 18' des Rohres 60 in die fixierende Stellung verschoben, so gleiten die Abschrägungen 70 der Flanken 68 der Sicherungselemente 24' an der im Winkel α zum Nutboden 32 angeordneten Flanke 66 der Umfangsnut 20' entlang. Das Sicherungselement 24 wird in die zweite Umfangsnut 20' der Welle 58 hineingedrückt und das erste Turboladerbauteil 10 wird gegenüber dem zweiten Turboladerbauteil 12 in Form der Welle 58 in axialer Richtung 14 verspannt.

Die Verschiebeelemente 30 können also drückend und/oder ziehend wirken und sowohl im radial innen liegenden als auch im radial aussen liegenden Turboladerbauteil angeordnet sein. In den in den Figuren gezeigten Beispielen sind die Sicherungselemente 24, 24' jeweils als Kreisbogensegmente ausgestaltet. Es ist aber auch denkbar die Sicherungselemente 24, 24' in Form von Polygonen oder einfachen Winkeln mit zwei Schenkeln auszugestalten. Für Bauteile 10, 12 mit grossem Durchmesser können sogar Sicherungselemente 24, 24' in Stabform günstig sein. Diese sollten dann aber keine zu grosse Länge aufweisen, damit ihre Endbereiche nicht zu weit von der Oberfläche des innenliegenden Bauteils 10, 12 abstehen. Bei solchen stabförmigen Sicherungselementen 24, 24' werden vorteilhaft statt einem Verschiebemittel 30 in der Mitte des Sicherungselementes 24, 24' zwei Verschiebemittel 30 in den Endbereichen des Sicherungselementes 24, 24' eingesetzt. Die Sicherungselemente 24, 24' sind vorzugsweise aus Federstahl oder hochfesten Stählen mit grosser Streckgrenze hergestellt. Auch Vergütungsstähle oder andere Materialien mit entsprechenden Eigenschaften können verwendet werden.

### Bezugszeichenliste

- h₁: radiale Höhe erste Nut
- h₂: radiale Höhe zweite Nut
- hₛ: radiale Höhe Sicherungselement
- α: Winkel Flanke/Nutboden

- 10: erstes Bauteil
- 12: zweites Bauteil
- 14: axiale Richtung
- 16: Stiftnut
- 18, 18': erste Umfangsnut
- 20, 20': zweite Umfangsnut
- 22: Sicherungsvorrichtung
- 24, 24': Sicherungselement
- 25: Schweissnaht
- 26: Ränder der ersten Nut
- 28: radiale Öffnung
- 29: radiale Richtung
- 30: Verschiebemittel
- 32: Nutboden zweite Nut
- 34: Nutboden erste Nut
- 35: Umfangsrichtung
- 36, 36': Schraube
- 37: Begrenzung der Umfangsnut
- 38: Fussbereich Schraube
- 40: Linksgewinde
- 40': Innengewinde links
- 42: Kopfbereich Schraube
- 44: Rechtsgewinde
- 44': Innengewinde rechts
- 46: zusätzliche Verschiebemittel
- 48: Anpressschraube
- 50: radiale Löcher
- 52: Mutter
- 53: mittlerer Bereich
- 54: Federende
- 56: Verschiebestift
- 58: Welle
- 60: Rohr
- 62: Endbereich Welle
- 62': Wellenende
- 64: Endbereich Rohr
- 66: Flanke der zweiten Nut
- 68: Flanke Sicherungselement
- 70: Abschrägung Flanke
- 72: Dichtmittel

## Patentansprüche

1. Turboladergehäuse, umfassend ein erstes Gehäusebauteil (10) mit einer achssymmetrischen Aussenwand und ein zweites Gehäusebauteil (12) mit einer achssymmetrischen Innenwand, wobei das erste Gehäusebauteil (10) radial nach Innen und das zweite Gehäusebauteil (12) radial nach Aussen einen Gasströmungskanal (9) begrenzen, die Innenwand des zweiten Gehäusebauteils (12) und die Aussenwand des ersten Gehäusebauteils (10) Verbindungsbereiche (11, 11') aufweisen, die einander in axialer Richtung (14) koaxial überlappen und in denen die Innenwand des zweiten Gehäusebauteils (12) die Aussenwand des ersten Gehäusebauteils (10) radial formschlüssig umfasst, und im Bereich der formschlüssigen Verbindung zur axialen Sicherung eine etwa ringförmige Sicherungsvorrichtung (22) vorgesehen ist,
**dadurch gekennzeichnet, dass**
als Sicherungsvorrichtung (22) mindestens zwei ringsegmentförmige Sicherungselemente (24, 24') vorgesehen sind, dass
die Verbindungsbereiche (11, 11') einander gegenüberliegende Umfangsnuten (18, 18', 20, 20') aufweisen, in die die mindestens zwei ringsegmentförmigen Sicherungselemente (24, 24') einsetzbar sind, die zur axialen Fixierung gleichzeitig in die beiden Umfangsnuten (18, 18', 20, 20') eingreifen, dass
die radiale Höhe (h₁) der ersten Umfangsnut (18, 18') im ersten Bauteil (10) mindestens so gross ist wie die radiale Höhe (hₛ) der Sicherungselemente (24, 24'), und dass den Sicherungselementen (24, 24') Verschiebemittel (30) zum Verschieben in radialer Richtung (29) zugeordnet sind, wobei im ersten und/ oder zweiten Gehäusebauteil (10, 12) den entsprechenden Umfangsnuten (18, 18', 20, 20') zugeordnete, radial gerichtete Öffnungen (28) zum Hindurchführen der Verschiebemittel (30) vorgesehen sind.

2. Turboladergehäuse nach Anspruch 1, **dadurch gekennzeichnet, dass** die radiale Höhe (h₂) der zweiten Umfangsnut (20, 20') im zweiten Bauteil (12) geringer ist als die radiale Höhe (hₛ) des Sicherungselementes (24, 24').

3. Turboladergehäuse nach Ansprüch 1 oder 2, **dadurch gekennzeichnet, dass** als Verschiebemittel (30) für das Sicherungselement (24, 24') ein Verschiebestift (56) und/oder eine Schraube (36, 36') vorgesehen ist.

4. Turboladergehäuse nach einem der vorgängigen Ansprüche, **dadurch gekennzeichnet, dass** zusätzliche Verschiebemittel (46), vorzugsweise in Form von am Sicherungselement (24, 24') ausgebildeten Federenden (54), vorgesehen sind.

5. Turboladergehäuse nach einem der vorgängigen Ansprüche, **dadurch gekennzeichnet, dass** die Sicherungselemente (24, 24') eine bestimmte Länge aufweisen und die Umfangsnuten (18, 18', 20, 20') in Umfangsrichtung (35) auf die Länge der Sicherungselemente (24, 24') begrenzt sind.

6. Turboladergehäuse nach einem der vorgängigen Ansprüche, **dadurch gekennzeichnet, dass** in miteinander verbundenem Zustand wenigstens eine Flanke der ersten Umfangsnut (18, 18') gegen eine Flanke (66) der zweiten Umfangsnut (20, 20') derart axial versetzt angeordnet ist, dass das Sicherungselement (24, 24') in seiner fixierenden Stellung das zweite Bauteil (12) gegenüber dem ersten Bauteil (10) in axialer Richtung (14) verspannt.

7. Turboladergehäuse nach Anspruch 6, **dadurch gekennzeichnet, dass** die mit der Spannkraft beaufschlagte Flanke (66) der zweiten Umfangsnut (20, 20') mit dem Nutboden (34) einen stumpfen Winkel α einschliesst und die entsprechenden Flanken (68) der Sicherungselemente (24, 24') vorzugsweise eine entsprechende Abschrägung (70) aufweisen.

8. Turboladergehäuse nach einem der vorhergehenden Ansprüche, **dadurch gekennzeichnet, dass** die Umfangsnuten (18, 18', 20, 20') Dichtmittel aufweisen.

9. Turbolader mit einem Gehäuse gemäss einem der vorhergehenden Ansprüche.

## Claims

1. Turbocharger casing, comprising a first casing component (10) with an axially symmetrical outer wall and a second casing component (12) with an axially symmetrical inner wall, the first casing component (10) delimiting a gas flow duct (9) radially inwards, the second casing component (12) delimiting said gas flow duct (9) radially outwards, the inner wall of the second casing component (12) and the outer wall of the first casing component (10) having connecting regions (11, 11') which overlap one another coaxially in the axial direction and in which the inner wall of the second casing component (12) radially surrounds the outer wall of the first casing component (10) positively, and an approximately annular securing device (22) being provided for axial securing in the region of the positive connection, **characterized in that** at least two ring-segment-shaped securing elements (24, 24') are provided as securing device (22), **in that** the connecting regions (11, 11') have circumferential grooves (18, 18', 20, 20') which are located opposite one another and into which can be inserted the at least two ring-segment-shaped securing elements (24, 24') which, for axial fixing, engage simultaneously into the two circumferential grooves (18, 18', 20, 20'), **in that** the radial height (h₁) of the first circumferential groove (18, 18') in the first component (10) is at least as great as the radial height (hₛ) of the securing elements (24, 24'), and **in that** the securing elements (24, 24') are assigned displacement means (30) for displacement in the radial direction (29), radially directed orifices (28), assigned to the corresponding circumferential grooves (18, 18', 20, 20'), for leading through the displacement means (30) being provided in the first and/or the second casing component (10, 12).

2. Turbocharger casing according to Claim 1, **characterized in that** the radial height (h₂) of the second circumferential groove (20, 20') in the second component (12) is smaller than the radial height (hₛ) of the securing element (24, 24').

3. Turbocharger casing according to Claim 1 or 2, **characterized in that** a displacement pin (56) and/or a screw (36, 36') are provided as displacement means (30) for the securing element (24, 24').

4. Turbocharger casing according to one of the preceding claims, **characterized in that** additional displacement means (46), preferably in the form of spring ends (54) formed on the securing element (24, 24'), are provided.

5. Turbocharger casing according to one of the preceding claims, **characterized in that** the securing elements (24, 24') have a specific length and the circumferential grooves (18, 18', 20, 20') are limited in the circumferential direction (35) to the length of the securing elements (24, 24').

6. Turbocharger casing according to one of the preceding claims, **characterized in that**, in the state connected to one another, at least one flank of the first circumferential groove (18, 18') is arranged so as to be offset axially relative to a flank (66) of the second circumferential groove (20, 20'), in such a way that the securing element (24, 24'), in its fixing position, braces the second component (12) relative to the first component (10) in the axial direction (14).

7. Turbocharger casing according to Claim 6, **characterized in that** that flank (66) of the second circumferential groove (20, 20') which is subjected to the clamping force forms an obtuse angle α with the groove bottom (34), and the corresponding flanks (68) of the securing elements (24, 24') preferably have a corresponding bevel (70).

8. Turbocharger casing according to one of the preceding claims, **characterized in that** the circumferential grooves (18, 18', 20, 20') have sealing means.

9. Turbocharger with a casing according to one of the preceding claims.

## Revendications

1. Boîtier de turbocompresseur, comprenant un premier composant de boîtier (10) avec une paroi extérieure à symétrie axiale et un deuxième composant de boîtier (12) avec une paroi intérieure à symétrie axiale, le premier composant de boîtier (10) limitant radialement vers l'intérieur un conduit d'écoulement de gaz (9) et le deuxième composant de boîtier (12) le limitant radialement vers l'extérieur, la paroi intérieure du deuxième composant de boîtier (12) et la paroi extérieure du premier composant de boîtier (10) présentant des régions de connexion (11, 11') qui se chevauchent coaxialement dans la direction axiale (14) et dans lesquelles la paroi intérieure du deuxième composant de boîtier (12) entoure radialement par coopération de forme la paroi extérieure du premier composant de boîtier (10), et un dispositif de fixation approximativement annulaire (22) étant prévu dans la région de la connexion par coopération de forme pour la fixation axiale,
**caractérisé en ce que**
l'on prévoit en tant que dispositif de fixation (22) au moins deux éléments de fixation (24, 24') en forme de segments annulaires,
**en ce que** les régions de connexion (11, 11') présentent des rainures périphériques (18, 18', 20, 20') en regard dans lesquelles les aux moins deux éléments de fixation (24, 24') en forme de segments annulaires peuvent être insérés et viennent en prise pour la fixation axiale simultanément dans les deux rainures périphériques (18, 18', 20, 20'),
**en ce que** la hauteur radiale (h₁) de la première rainure périphérique (18, 18') dans le premier composant (10) est au moins aussi grande que la hauteur radiale (hₛ) des éléments de fixation (24, 24'), et **en ce que** des moyens de coulissement (30) pour le coulissement dans la direction radiale (29) sont associés aux éléments de fixation (24, 24'), des ouvertures (28) orientées radialement, associées aux rainures périphériques correspondantes (18, 18', 20, 20') dans le premier et/ou le deuxième composant de boîtier (10, 12) étant prévues pour le passage des moyens de coulissement (30).

2. Boîtier de turbocompresseur selon la revendication 1, **caractérisé en ce que** la hauteur radiale (h₂) de la deuxième rainure périphérique (20, 20') dans le deuxième composant (12) est plus petite que la hauteur radiale (hₛ) de l'élément de fixation (24, 24').

3. Boîtier de turbocompresseur selon la revendication 1 ou 2, **caractérisé en ce que** l'on prévoit en tant que moyen de coulissement (30) pour l'élément de fixation (24, 24') une tige coulissante (56) et/ou une vis (36, 36').

4. Boîtier de turbocompresseur selon l'une quelconque des revendications précédentes, **caractérisé en ce que** l'on prévoit des moyens de coulissement supplémentaires (46), de préférence sous forme d'extrémités de ressorts (54) réalisées sur l'élément de fixation (24, 24').

5. Boîtier de turbocompresseur selon l'une quelconque des revendications précédentes, **caractérise en ce que** les éléments de fixation (24, 24') présentent une longueur déterminée et les rainures périphériques (18, 18', 20, 20') sont limitées dans la direction périphérique (35) à la longueur des éléments de fixation (24, 24').

6. Boîtier de turbocompresseur selon l'une quelconque des revendications précédentes, **caractérisé en ce que** dans l'état connecté ensemble, au moins un flanc de la première rainure périphérique (18, 18') est disposé de manière décalée axialement contre un flanc (66) de la deuxième rainure périphérique (20, 20'), de telle sorte que l'élément de fixation (24, 24') serre dans sa position de fixation le deuxième composant (12) par rapport au premier composant (10) dans la direction axiale (14).

7. Boîtier de turbocompresseur selon la revendication 6, **caractérisé en ce que** le flanc (66) sollicité avec la force de serrage de la deuxième rainure périphérique (20, 20') forme avec le fond de rainure (34) un angle obtus α et les flancs correspondants (68) des éléments de fixation (24, 24') présentent de préférence un biseautage correspondant (70).

8. Boîtier de turbocompresseur selon l'une quelconque des revendications précédentes, **caractérisé en ce que** les rainures périphériques (18, 18', 20, 20') présentent des moyens d'étanchéité.

9. Turbocompresseur comprenant un boîtier selon l'une quelconque des revendications précédentes.
